# EUROPEAN PATENT APPLICATION

(11) **EP 4 813 710 A1**
(43) Date of publication of application: **30.09.2026**
(21) Application number: 26161177.6
(22) Date of filing: 27.02.2026
(51) Int. Cl.: B60K 6/48, B60K 6/387, B60K 6/547, B60W 10/06, B60W 10/08, B60W 20/15, B60W 20/19, B60W 30/20, B60W 30/18

(54) **VEHICLE WITH IMPROVED BACKLASH ELIMINATION**

(30) Priority: 28.03.2025 JP 2025054941
(71) Applicant: MAZDA MOTOR CORPORATION, Hiroshima 730-8670 (JP)
(72) Inventor: Tanaka, Kenji, Aki-gun, Hiroshima, 730-8670 (JP); Tanaka, Yuichi, Aki-gun, Hiroshima, 730-8670 (JP); Mitani, Aiko, Aki-gun, Hiroshima, 730-8670 (JP); Fukuchi, Kenta, Aki-gun, Hiroshima, 730-8670 (JP); Osugi, Kei, Aki-gun, Hiroshima, 730-8670 (JP); Ishiyama, Yuki, Aki-gun, Hiroshima, 730-8670 (JP); Shimayori, Masaya, Aki-gun, Hiroshima, 730-8670 (JP)
(74) Representative: Lorenz Seidler Gossel Part. mbB

(57) **Abstract**

The invention relates to a vehicle including a motor (2) that generates torque for driving the vehicle, a power transmission mechanism (4) configured to transmit the torque of the motor (2) to a driving wheel (5) of the vehicle through a plurality of gears, and a control device (20) configured to control the torque of the motor (2). The control device (20) is configured to control the motor (2) to: increase the torque of the motor (2) in a stepwise manner within a range less than a predetermined value larger than zero when backlash elimination in the gears of the power transmission mechanism (4) starts when the vehicle transitions from a deceleration state to an acceleration state; and/or reduce the torque of the motor (2) in a stepwise manner within a range equal to or larger than a predetermined value smaller than zero when backlash elimination in the gears of the power transmission mechanism (4) starts when the vehicle transitions from an acceleration state to a deceleration state.

## Description

### [Technical Field]

The present invention relates to a vehicle that performs control for backlash elimination in gears of a power transmission mechanism present between a drive source and a driving wheel.

### [Background Art]

A technique of this type of is described, for example, in JP 2023-061270 A. In JP 2023-061270 A, a technique that reduces the rate of change of a target torque of a drive motor with time in a hybrid vehicle when the target torque is within a predetermined range that crosses zero torque is described. This technique aims to reduce impact and noise caused by gear backlash (backlash elimination).

### [Summary of Invention]

### [Problem to be Solved by the Invention]

When a vehicle transitions from deceleration to acceleration, backlash elimination is performed in a plurality of gears (e.g., a differential gear and a final gear) in a power transmission mechanism present between a motor (drive source) and a driving wheel. At this time, the power transmission mechanism switches from a state in which gear backlash is eliminated to the driving wheel side to a state in which gear backlash is eliminated to the motor side.

When backlash elimination is performed when the vehicle transitions from deceleration to acceleration as described above, basically the torque of the motor is increased, and it can be said that, in order to reduce shock (in this specification, the word "shock" is used, including vibration and abnormal noise) during the backlash elimination, it is desirable to gradually increase the torque of the motor. However, gradually increasing the torque may reduce acceleration response. For example, it can be said that when the increase rate of the torque is small when the driver's acceleration intention is relatively strong, the driver is likely to feel that the acceleration response is low.

Note that although the problem caused when a vehicle transitions from deceleration to acceleration has been described above, a problem similar to this also arises when a vehicle transitions from acceleration to deceleration.

The present invention has been made to solve the problem in the conventional technique described above, and an object thereof is to provide a vehicle control system that can control the torque of a motor to achieve shock reduction and acceleration or deceleration response improvement during backlash elimination in gears of a power transmission mechanism when a vehicle transitions from deceleration to acceleration or from acceleration to deceleration.

### [Means for Solving the Problem]

In order to achieve the object described above, the present invention is a vehicle including: a motor that generates torque for driving a vehicle; a power transmission mechanism configured to transmit the torque of the motor to a driving wheel of the vehicle through a plurality of gears; and a control device configured to control the torque of the motor, characterized in that the control device is configured to control the motor to increase the torque of the motor in a stepwise manner within a range less than a predetermined value larger than zero when backlash elimination in the gears of the power transmission mechanism starts when the vehicle transitions from a deceleration state to an acceleration state.

According to the present invention configured in this manner, since the torque of the motor is increased in a stepwise manner when the backlash elimination in the gears of the power transmission mechanism starts when the vehicle transitions from deceleration to acceleration, it is possible to promptly complete the backlash elimination and improve acceleration response. In addition, according to the present invention, since the torque that is increased in a stepwise manner is limited to be less than the predetermined value larger than zero, it is possible to avoid separation of the eliminated backlash (that is, tooth separation) and reduce shock caused by this. From the above, according to the present invention, when the vehicle transitions from deceleration to acceleration, it is possible to achieve shock reduction and acceleration response improvement during the backlash elimination in the gears of the power transmission mechanism.

In the present invention, preferably, the vehicle further includes an accelerator opening degree sensor that detects an accelerator opening degree, the accelerator opening degree being an amount of operation on an accelerator pedal of the vehicle, and the control device is configured to calculate a target jerk that should be generated in the vehicle on the basis of at least the accelerator opening degree, and when the target jerk is equal to or larger than a predetermined value, to control the motor to increase the torque of the motor in a stepwise manner within the range less than the predetermined value when the backlash elimination in the gears starts. The vehicle may further comprise a vehicle speed sensor that detects a vehicle speed, wherein the control device is configured to calculate the target jerk that should be generated in the vehicle on the basis of at least the accelerator opening degree and the vehicle speed.

According to the present invention configured in this manner, since the torque of the motor is increased in a stepwise manner when the target jerk is equal to or larger than the predetermined value, it is possible to ensure acceleration response when the driver's acceleration intention is relatively strong.

In the present invention, preferably, the control device is configured to control the motor to reduce the torque of the motor until the backlash elimination in the gears is completed after the torque of the motor is increased in a stepwise manner.

According to the present invention configured in this manner, since the torque of the motor is reduced after the torque is increased in a stepwise manner, it is possible to effectively reduce shock at the completion of the backlash elimination.

In the present invention, preferably, the control device is configured to control the motor to increase the torque of the motor upon completion of the backlash elimination in the gears.

According to the present invention configured in this manner, it is possible to promptly accelerate the vehicle after the backlash elimination is completed.

In the present invention, preferably, when the vehicle transitions from a deceleration state to an acceleration state, the control device is configured to control the motor to increase the torque of the motor and limit an increase rate of the torque until the backlash elimination in the gears starts after the torque of the motor reaches a predetermined torque less than zero, before the backlash elimination in the gears starts.

According to the present invention configured in this manner, since the increase rate of the torque is limited before the backlash elimination in the gears starts, it is possible to effectively reduce shock at the start of the backlash elimination. In addition, according to the present invention, since the torque of the motor is increased before the backlash elimination starts, it is possible to relatively promptly start the backlash elimination and ensure acceleration response.

According to another aspect, the present invention is a vehicle including: a motor that generates torque for driving a vehicle; a power transmission mechanism configured to transmit the torque of the motor to a driving wheel of the vehicle through a plurality of gears; and a control device configured to control the torque of the motor, characterized in that when the vehicle transitions from an acceleration state to a deceleration state, the control device is configured to control the motor to reduce the torque of the motor in a stepwise manner within a range equal to or larger than a predetermined value smaller than zero when backlash elimination in the gears of the power transmission mechanism starts.

According to the present invention configured in this manner, when the vehicle transitions from acceleration to deceleration, it is possible to achieve shock reduction and deceleration response improvement during the backlash elimination in the gears of the power transmission mechanism.

In the present invention, preferably, the vehicle further includes an accelerator opening degree sensor that detects an accelerator opening degree, the accelerator opening degree being an amount of operation on an accelerator pedal of the vehicle, and the control device is configured to calculate a target jerk that should be generated in the vehicle on the basis of at least the accelerator opening degree, and when the target jerk is less than a predetermined value, to control the motor to reduce the torque of the motor in a stepwise manner within the range equal to or larger than the predetermined value when the backlash elimination in the gears starts.

According to the present invention configured in this manner, since the torque of the motor is reduced in a stepwise manner when the target jerk (negative value) is less than the predetermined value (negative value), it is possible to ensure deceleration response when the driver's deceleration intention is relatively strong.

In the present invention, preferably, the control device is configured to control the motor to increase the torque of the motor until the backlash elimination in the gears is completed after the torque of the motor is reduced in a stepwise manner.

According to the present invention configured in this manner, since the torque of the motor is increased after the torque is reduced in a stepwise manner, it is possible to effectively reduce shock at the completion of the backlash elimination.

In the present invention, preferably, the control device is configured to control the motor to reduce the torque of the motor upon completion of the backlash elimination in the gears.

According to the present invention configured in this manner, it is possible to promptly decelerate the vehicle after the completion of the backlash elimination.

In the present invention, preferably, when the vehicle transitions from an acceleration state to a deceleration state, the control device is configured to control the motor to reduce the torque of the motor and limit a reduction rate of the torque until the backlash elimination in the gears starts after the torque of the motor reaches a predetermined torque larger than zero, before the backlash elimination in the gears starts.

According to the present invention configured in this manner, since the reduction rate of the torque is limited before the backlash elimination in the gears starts, it is possible to reduce shock at the start of the backlash elimination. In addition, according to the present invention, since the torque of the motor is reduced before the backlash elimination starts, it is possible to relatively promptly start the backlash elimination and ensure deceleration response.

### [Advantageous Effect of Invention]

According to the vehicle according to the present invention, it is possible to control the torque of the motor to achieve shock reduction and acceleration or deceleration response improvement during backlash elimination in the gears of the power transmission mechanism when the vehicle transitions from deceleration to acceleration or from acceleration to deceleration.

### [Brief Description of Drawings]

FIG. 1 is a schematic configuration diagram of a vehicle according to an embodiment of the present invention.
FIG. 2 is a block diagram showing an electrical configuration of the vehicle according to the embodiment of the present invention.
FIG. 3 is a time chart showing backlash elimination control according to a first embodiment of the present invention.
FIG. 4 is a flowchart showing the backlash elimination control according to the first embodiment of the present invention.
FIG. 5 is a time chart showing backlash elimination control according to a second embodiment of the present invention.
FIG. 6 is a flowchart showing the backlash elimination control according to the second embodiment of the present invention.
FIG. 7 is a time chart showing backlash elimination control according to modifications of the present invention.

### [Mode for Carrying Out the Invention]

A vehicle according to an embodiment of the present invention will be described below with reference to the accompanying drawings.

### <System Configuration>

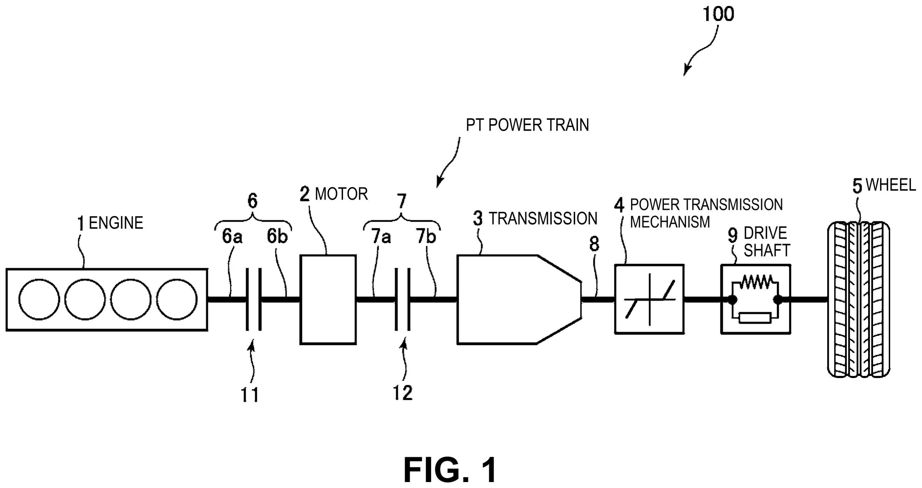

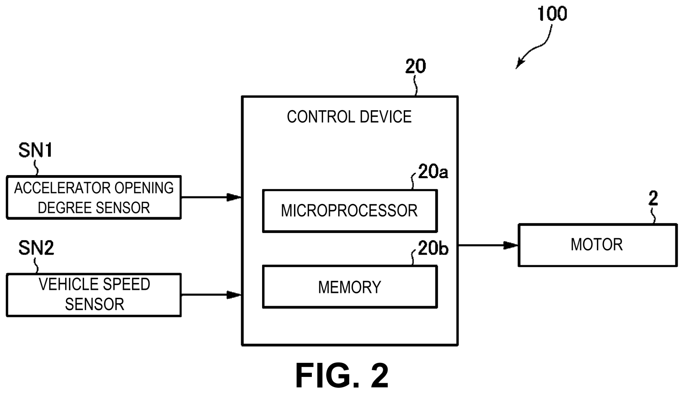

First, the configuration of the vehicle according to the present embodiment will be described with reference to FIGS. 1 and 2. FIG. 1 is a configuration diagram schematically showing the vehicle according to the present embodiment, and FIG. 2 is a block diagram showing an electrical configuration of the vehicle according to the present embodiment.

As shown in FIG. 1, a vehicle control system 100 is applied to a vehicle (hybrid vehicle) including an engine (internal combustion engine) 1 and a motor 2 as a powertrain PT. In the vehicle having vehicle control system 100, the motor 2 is disposed at a position downstream of the engine 1 on a power transmission path of the vehicle, a transmission 3 is disposed at a position downstream of the motor 2, and a power transmission mechanism 4 that transmits torque (driving force) for driving the vehicle is disposed at a position downstream of the transmission 3. For example, the transmission 3 is an automatic transmission to which a torque converter with a lock-up clutch is applied.

Specifically, an output shaft of the engine 1 and a rotation shaft of the motor 2 are coaxially coupled by a shaft 6 through a first clutch 11 that can be engaged and disengaged. The first clutch 11 is composed of, for example, a dry multiple disc clutch or a wet multiple disc clutch that can change the transmission torque capacity by controlling the clutch working oil flow rate and/or the clutch working oil pressure continuously or in stages using a motor or a solenoid (not shown). An upstream end of the first clutch 11 is coupled to the output shaft of the engine 1 through a shaft portion 6a, and a downstream end of the first clutch 11 is coupled to an upstream end of the rotation shaft of the motor 2 through a shaft portion 6b. Note that a flywheel having a predetermined weight may be provided on the shaft portion 6a.

In addition, the rotation shaft of the motor 2 and a rotation shaft of the transmission 3 are coaxially coupled by a shaft 7 through a second clutch 12 that can be engaged and disengaged. As with the first clutch 11, the second clutch 12 is composed of, for example, a dry multiple disc clutch or a wet multiple disc clutch that can change the transmission torque capacity by controlling the clutch working oil flow rate and/or the clutch working oil pressure continuously or in stages using a motor or a solenoid (not shown). An upstream end of the second clutch 12 is coupled to a downstream end of the rotation shaft of the motor 2 through a shaft portion (first shaft portion) 7a, and a downstream end of the second clutch 12 is coupled to the rotation shaft of the transmission 3 through a shaft portion (second shaft portion) 7b. Note that the second clutch 12 only needs to be capable of at least allowing and interrupting the transmission of torque between the motor 2 and the transmission 3, and may be formed inside the transmission 3.

In addition, torque is input to the power transmission mechanism 4 through the output shaft 8 of the transmission 3, and the power transmission mechanism 4 transmits this torque to a wheel (driving wheel) 5 through a drive shaft 9. The power transmission mechanism 4 includes a plurality of gears such as a differential gear that distributes the torque to a pair of left and right wheels 5 and a final gear, from the transmission 3 to the drive shaft 9. The shaft 6, the shaft 7, the output shaft 8, and the drive shaft 9 are all formed to be torsionally deformable, and the drive shaft 9, in particular, has a characteristic that can be modeled using a spring mass model.

Next, as shown in FIG. 2, the vehicle control system 100 further includes a control device 20 that is composed of a circuit and based on a well-known microcomputer. The control device 20 includes one or more processors 20a as a central processing unit (CPU) that executes programs, a memory 20b that is composed of, for example, a random access memory (RAM) or a read only memory (ROM) and stores programs and data, an input/output bus that inputs and outputs electric signals, and the like. For example, the control device 20 is composed of an electronic control unit (ECU).

Signals from an accelerator opening degree sensor SN1 that detects an accelerator opening degree, which is the amount of operation on an accelerator pedal by the driver, and a vehicle speed sensor SN2 that detects a vehicle speed are mainly input to the control device 20, and the control device 20 outputs a control signal to control the motor 2 on the basis of these signals. In the present embodiment, the control device 20 calculates a target jerk that should be generated in the vehicle on the basis of at least the accelerator opening degree, and controls the torque of the motor 2 for backlash elimination in the gears in the power transmission mechanism 4 in accordance with the target jerk (backlash elimination control). The control device 20 starts the backlash elimination control basically in accordance with the accelerator operation by the driver, preferably further using a request from advanced driver-assistance systems (ADAS).

Note that although FIG. 1 shows an example in which the present invention is applied to the hybrid vehicle including the engine 1 and the motor 2 as motive power sources, the present invention is also applicable to an electric vehicle that is not equipped with the engine 1 and includes only the motor 2 as a motive power source.

### <Backlash Elimination Control>

Next, embodiments (first and second embodiments) of the backlash elimination control performed by the control device 20 in the present embodiment will be described. Basically, the control device 20 controls the torque of the motor 2 when backlash elimination is performed in the plurality of gears in the power transmission mechanism 4 when the vehicle transitions from deceleration to acceleration, in particular, controls the torque of the motor 2 to achieve shock reduction and acceleration response improvement during the backlash elimination.

### (First Embodiment)

First, in the first embodiment, when the target jerk that should be generated in the vehicle is less than a predetermined value when the vehicle transitions from deceleration to acceleration, the control device 20 increases the torque of the motor 2 and limits an increase rate of the torque until backlash elimination in the gears of the power transmission mechanism 4 starts after the torque of the motor 2 reaches a predetermined torque less than zero. When the target jerk is less than the predetermined value, it can be said that the driver's acceleration intention is weak, and thus, by making the increase rate of the torque gentle, priority is placed on reducing shock at the start of the backlash elimination, in particular, shock caused when backlash elimination in the first gear of the plurality of gears of the power transmission mechanism 4 occurs. On the other hand, since in the first embodiment the torque of the motor 2 is increased before the start of the backlash elimination, it is possible to relatively promptly start the backlash elimination and also ensure acceleration response.

In addition, in the first embodiment, the control device 20 reduces the torque of the motor 2 until the backlash elimination in the gears of the power transmission mechanism 4 is completed after the backlash elimination starts. This makes it possible to reduce shock at the completion of the backlash elimination, in particular, shock when the backlash elimination is fully completed in the plurality of gears of the power transmission mechanism 4. Then, when the backlash elimination in the gears of the power transmission mechanism 4 is completed in this manner, the control device 20 accelerates the vehicle in accordance with the accelerator operation of the driver by increasing the torque of the motor 2.

Note that, when the vehicle transitions from deceleration to acceleration, in the plurality of gears in the power transmission mechanism 4, rotational backlash is basically eliminated in order from the gear on the upstream side (motor 2 side). This elimination of the rotational backlash accumulates energy, and the accumulated energy eliminates thrust backlash (in this case, a thrust force is generated in a helical gear). Then, due to the elimination of the thrust backlash, abnormal noise may be caused by a collision with a housing of a unit.

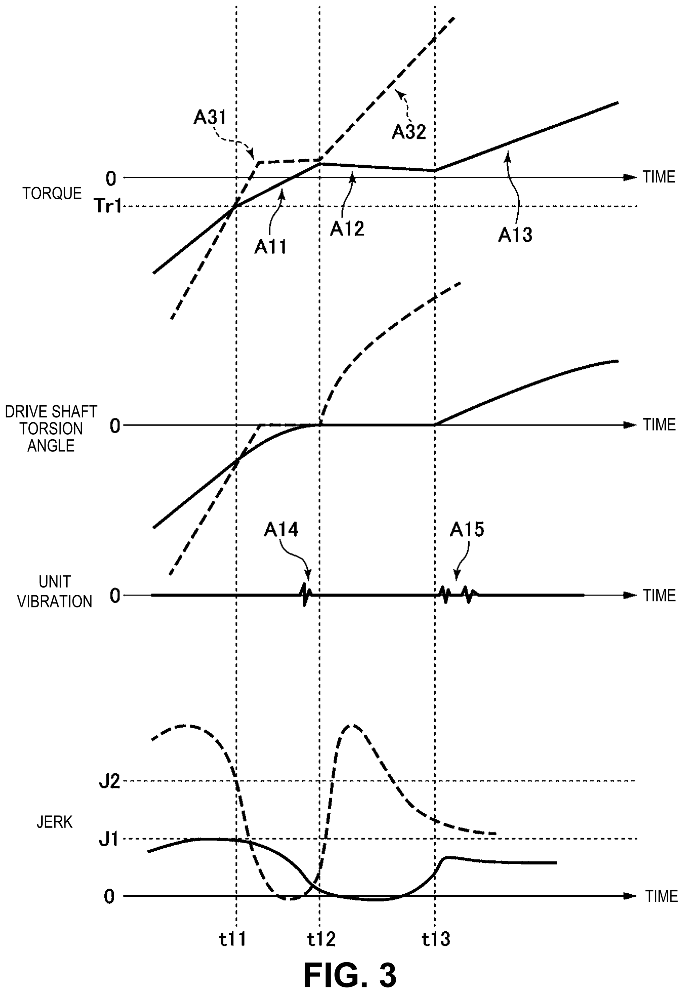

Next, a time chart showing the backlash elimination control according to the first embodiment will be described with reference to FIG. 3. FIG. 3 shows, from top to bottom, the torque of the motor 2, the torsion angle of the drive shaft 9, unit vibration inside the vehicle, and the jerk (target jerk). In addition, a solid-line graph shows a temporal change in each parameter caused by the backlash elimination control according to the first embodiment, and a dashed-line graph shows a temporal change in each parameter caused by backlash elimination control according to a comparative example. Note that, for the unit vibration, only those that are caused by the backlash elimination control according to the first embodiment are shown.

The backlash elimination control according to the first embodiment is performed when the target jerk is less than a first predetermined value J1, and the backlash elimination control according to the comparative example is performed when the target jerk is equal to or larger than the first predetermined value J1, in particular, when the target jerk is equal to or larger than a second predetermined value J2 that is further larger than the first predetermined value J1. For example, the first predetermined value J1 is approximately 3 (m/s³), and the second predetermined value J2 is approximately 5 (m/s³).

As shown in FIG. 3, in the first embodiment, when the vehicle switches from a deceleration state to an acceleration state, the torque of the motor 2 is gradually increased (arrow A11) until the backlash elimination in the gears of the power transmission mechanism 4 starts after the torque of the motor 2 reaches a predetermined torque Tr1 less than zero (time t11). In this case, the torque of the motor 2 is increased to a torque larger than zero. By gradually increasing the torque of the motor 2 in this manner, vibration (e.g., rotational rattling) caused when the backlash elimination in the first gear of the plurality of gears of the power transmission mechanism 4 occurs is reduced (arrow A14).

Next, after the start of the backlash elimination in the gears (time t12), the torque of the motor 2 is reduced (arrow A12) until the backlash elimination in the gears is fully completed (time t13). In this case, the torque is reduced within a range in which tooth separation does not occur (e.g., within a range in which the torque of the motor 2 is larger than zero). By reducing the torque of the motor 2 in this manner, vibration caused when the backlash elimination is fully completed in the plurality of gears of the power transmission mechanism 4 (e.g., vibration caused by rotational backlash elimination or thrust backlash) is reduced (arrow A15). Then, after the backlash elimination in the gears is completed, the torque of the motor 2 is increased (arrow A13), and the drive shaft 9 begins to twist to the positive side.

According to the first embodiment as such, since the torque of the motor 2 is increased before the start of the backlash elimination, acceleration response can be ensured to a certain extent, and in addition, since the torque is gradually increased, shock at the start of the backlash elimination can be effectively reduced.

On the other hand, in the comparative example, when the vehicle switches from a deceleration state to an acceleration state, even after the torque of the motor 2 reaches the predetermined torque Tr1 less than zero (time t11), the torque of the motor 2 is promptly and largely increased, and thereafter, the torque of the motor 2 is temporarily maintained nearly constant (arrow A31). Accordingly, the backlash elimination in the gears of the power transmission mechanism 4 is promptly completed. Then, the torque of the motor 2 is increased (arrow A32), and the drive shaft 9 begins to twist to the positive side. According to the comparative example as such, it can be said that although the acceleration response is high, it is not possible to effectively reduce the shock during the backlash elimination as in the first embodiment.

Note that since the backlash elimination control according to the first embodiment is performed when the target jerk is less than the first predetermined value J1, that is, when the acceleration intention is low, shock reduction is prioritized over acceleration response improvement. On the other hand, since the backlash elimination control according to the comparative example is performed when the target jerk is equal to or larger than the second predetermined value J2, that is, when the acceleration intention is strong, acceleration response improvement is prioritized over shock reduction.

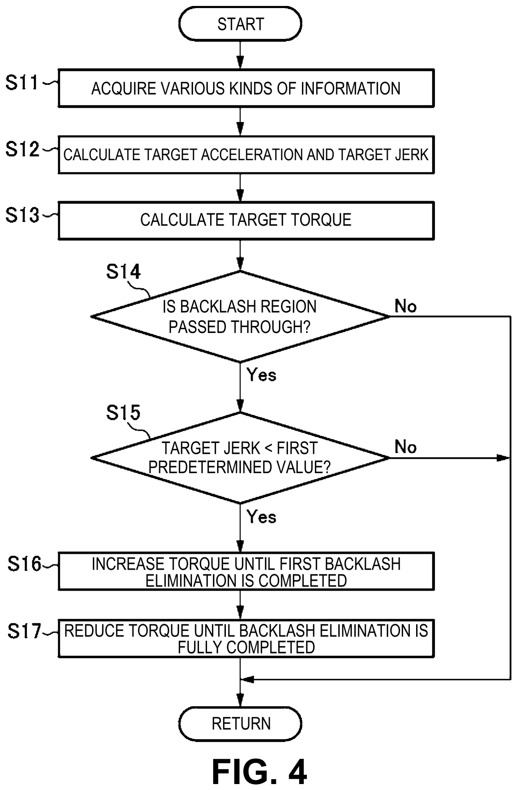

Next, a flowchart showing the backlash elimination control according to the first embodiment will be described with reference to FIG. 4. This flow is repeatedly executed by the control device 20 in a predetermined cycle. Specifically, the processor 20a in the control device 20 reads a program stored in the memory 20b and executes the program to implement the control related to the flow.

First, in step S11, the control device 20 acquires various kinds of information in the vehicle control system 100. In particular, the control device 20 acquires the accelerator opening degree detected by the accelerator opening degree sensor SN1 and the vehicle speed detected by the vehicle speed sensor SN2.

Next, in step S12, the control device 20 calculates a target acceleration on the basis of the accelerator opening degree, the vehicle speed, and the like acquired in step S11, and calculates a target jerk corresponding to the target acceleration. Specifically, the control device 20 first determines a target acceleration corresponding to the current accelerator opening degree and the current vehicle speed using, for example, a map defined by the accelerator opening degree and the vehicle speed. Then, the control device 20 calculates a target jerk (basically, the rate of change of the target acceleration) for achieving the target acceleration. Preferably, the control device 20 calculates the target jerk such that the acceleration is smoothly changed in accordance with the change speed of the accelerator opening degree. In this case, the control device 20 determines the target jerk having a larger value as the change speed of the accelerator opening degree is higher.

Next, in step S13, the control device 20 calculates a target torque that should be generated from the motor 2 in order to achieve these target values on the basis of the target acceleration and the target jerk calculated in step S12.

Next, in step S14, the control device 20 determines whether a backlash region of the gears of the power transmission mechanism 4 is passed through. In particular, the control device 20 determines the passage through the backlash region from the deceleration side to the acceleration side. Specifically, the control device 20 performs such a determination in step S14 by determining whether the target torque will cross 0 (N) (determining whether the target torque is going to cross zero in the direction from negative to positive), on the basis of a change in the target torque calculated in step S13 up to this time. When the control device 20 determines that the backlash region is passed through as a result of step S14 (step S14: Yes), the control device 20 proceeds to step S15. When the control device 20 does not determine that the backlash region is passed through (step S14: No), the control device 20 exits the flow.

Next, in step S15, the control device 20 determines whether the target jerk calculated in step S12 is less than the first predetermined value J1. Here, the control device 20 determines whether the driver's acceleration intention is weak. When the control device 20 determines that the target jerk is less than the first predetermined value J1 (step S15: Yes), that is, when the acceleration intention is weak, the control device 20 proceeds to step S16. On the other hand, when the control device 20 does not determine that the target jerk is less than the first predetermined value J1 (step S15: No), that is, when the target jerk is equal to or larger than the first predetermined value J1 (when the acceleration intention is relatively strong), the control device 20 exits the flow.

Next, in step S16, the control device 20 increases the torque of the motor 2 until the first backlash elimination is completed in the power transmission mechanism 4. In this case, the control device 20 changes the target torque calculated in step S13. Specifically, the control device 20 increases the torque of the motor 2 within a range of a predetermined increase rate (e.g., 20 Nm/s) until the backlash elimination in the gears of the power transmission mechanism 4 starts after the torque of the motor 2 reaches the predetermined torque Tr1 (e.g., - 2 Nm) less than zero. The predetermined torque Tr1 is the torque of the motor 2 at which the backlash elimination control according to the present embodiment should be started, and is set in advance in view of starting the backlash elimination control at an optimum timing before an entry into the backlash. In addition, the predetermined increase rate is set in advance in view of appropriately reducing vibration when backlash elimination in the first gear of the plurality of gears of the power transmission mechanism 4 occurs. When the control device 20 increases the torque of the motor 2 in this manner, the control device 20 increases the torque of the motor 2 to a torque larger than zero.

Next, in step S17, the control device 20 reduces the torque of the motor 2 until the backlash elimination is fully completed in the power transmission mechanism 4. Also in this case, the control device 20 changes the target torque calculated in step S13. Specifically, the control device 20 reduces the target torque (e.g., at a reduction rate of -4 Nm/s) until the backlash elimination in the gears is fully completed after the backlash elimination in the gears starts. In addition, the control device 20 reduces the torque within a range in which tooth separation does not occur.

According to the first embodiment described above, since the increase rate of the torque of the motor 2 is limited until the backlash elimination in the gears of the power transmission mechanism 4 starts after the torque of the motor 2 reaches the predetermined torque Tr1 less than zero when the target jerk is less than the first predetermined value J1 when the vehicle transitions from deceleration to acceleration, the shock at the start of the backlash elimination can be effectively reduced. Here, as the target jerk is a parameter that accurately indicates the driver's acceleration intention, it can be said that when the target jerk is less than the first predetermined value J1 is when the driver's acceleration intent is weak. Thus, according to the first embodiment, when the driver's acceleration intention is weak, the increase rate of the torque can be limited to prioritize backlash elimination shock reduction. In addition, according to the first embodiment, since the torque of the motor 2 is increased before the backlash elimination starts, it is possible to relatively promptly start the backlash elimination and ensure acceleration response. From the above, according to the first embodiment, it is possible to achieve shock reduction and acceleration response improvement during the backlash elimination in the gears of the power transmission mechanism 4 in a well-balanced manner, taking the driver's acceleration intention into consideration.

In addition, according to the first embodiment, since when the torque of the motor 2 is increased, the torque is increased to a torque larger than zero, it is possible to prevent the time for the backlash elimination from becoming long.

In addition, according to the first embodiment, since after the backlash elimination in the gears of the power transmission mechanism 4 starts, the torque of the motor 2 is reduced until the backlash elimination is completed, it is possible to effectively reduce shock at the completion of the backlash elimination.

In addition, according to the first embodiment, since the torque of the motor 2 is increased when the backlash elimination in the gears of the power transmission mechanism 4 is completed, it is possible to promptly accelerate the vehicle after the completion of the backlash elimination.

### (Second Embodiment)

Next, the second embodiment will be described. Here, description for configurations similar to those in the first embodiment will be omitted. That is, configurations that are not specifically described here are assumed to be similar to those in the first embodiment.

The second embodiment differs from the first embodiment in that the control device 20 increases the torque of the motor 2 in a stepwise manner within a range less than a predetermined value larger than zero when backlash elimination in the gears of the power transmission mechanism 4 starts when the vehicle transitions from deceleration to acceleration. This promptly completes the backlash elimination and improves acceleration response. From this point of view, backlash elimination control according to the second embodiment is performed when the target jerk is equal to or larger than the first predetermined value J1 (but less than the second predetermined value J2), that is, when the driver's acceleration intention is relatively strong.

In addition, in the second embodiment, the control device 20 reduces the torque of motor 2 until the backlash elimination in the gears is completed after the torque of the motor 2 is increased in a stepwise manner. This reduces shock at the completion of the backlash elimination, in particular, shock when the backlash elimination is fully completed in the plurality of gears of the power transmission mechanism 4.

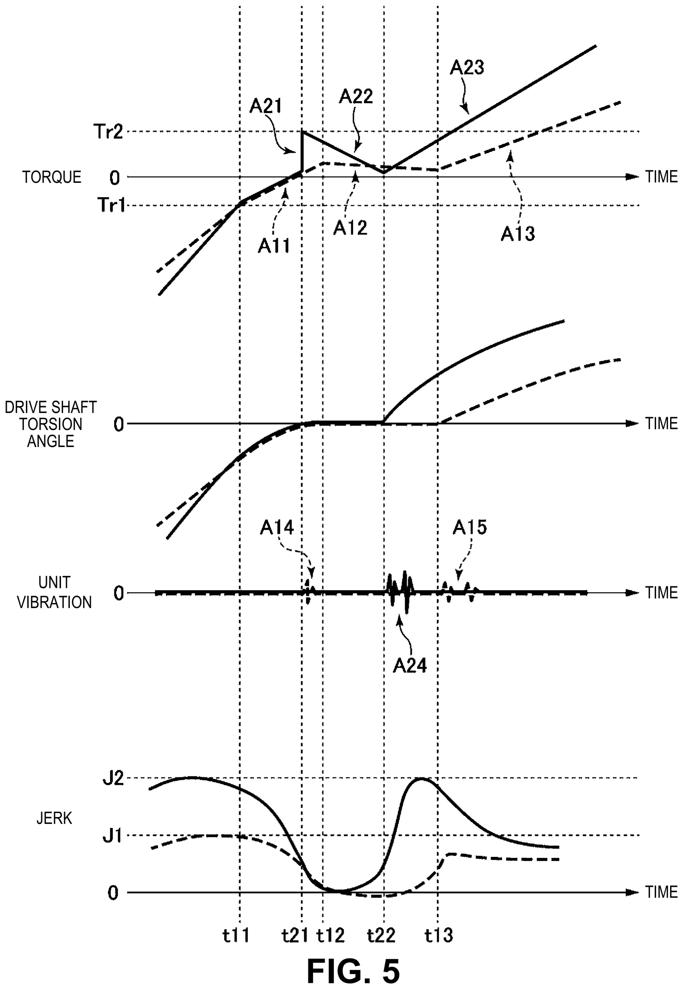

Next, a time chart showing backlash elimination control according to the second embodiment will be described with reference to FIG. 5. FIG. 5 also shows, from top to bottom, the torque of the motor 2, the torsion angle of the drive shaft 9, unit vibration inside the vehicle, and the jerk (target jerk). In addition, a solid-line graph shows a temporal change in each parameter caused by the backlash elimination control according to the second embodiment, and a dashed-line graph shows, for comparison, the temporal change in each parameter caused by the backlash elimination control according to the first embodiment (same as FIG. 3).

As described above, while the backlash elimination control according to the first embodiment is performed when the target jerk is less than the first predetermined value J1, the backlash elimination control according to the second embodiment is performed when the target jerk is equal to or larger than the first predetermined value J1 and less than the second predetermined value J2. Note that when the target jerk is equal to or larger than the second predetermined value J2, the backlash elimination control according to the comparative example is performed (the dashed line in FIG. 3).

As shown in FIG. 5, also in the second embodiment, as with the first embodiment, when the vehicle switches from a deceleration state to an acceleration state, the torque of the motor 2 is gradually increased (arrow A11) until the backlash elimination in the gears of the power transmission mechanism 4 starts after the torque of the motor 2 reaches the predetermined torque Tr1 less than zero (time t11). Thereafter, in the second embodiment, when the backlash elimination in the gears starts (time t21), the torque of the motor 2 is increased in a stepwise manner to a predetermined torque Tr2 larger than zero (arrow A21).

Then, after the torque of the motor 2 is increased in a stepwise manner, the torque of the motor 2 is reduced (arrow A22) until the backlash elimination in the gears is fully completed (time t22). In this case, the torque is reduced within a range in which tooth separation does not occur (e.g., within a range in which the torque of the motor 2 is larger than zero). By reducing the torque of the motor 2 in this manner, vibration caused when the backlash elimination is fully completed in the plurality of gears of the power transmission mechanism 4 (e.g., vibration caused by rotational backlash elimination or thrust backlash) is reduced (arrow A24). Then, after the backlash elimination in the gears is completed, the torque of the motor 2 is increased (arrow A23), and the drive shaft 9 begins to twist to the positive side.

While the backlash elimination in the gears is completed at time t13 in the first embodiment described above, in the second embodiment the backlash elimination in the gears is completed at time t22 that is earlier than time t13. Thus, according to the second embodiment, it is possible to shorten the time for the backlash elimination in the gears and improve acceleration response.

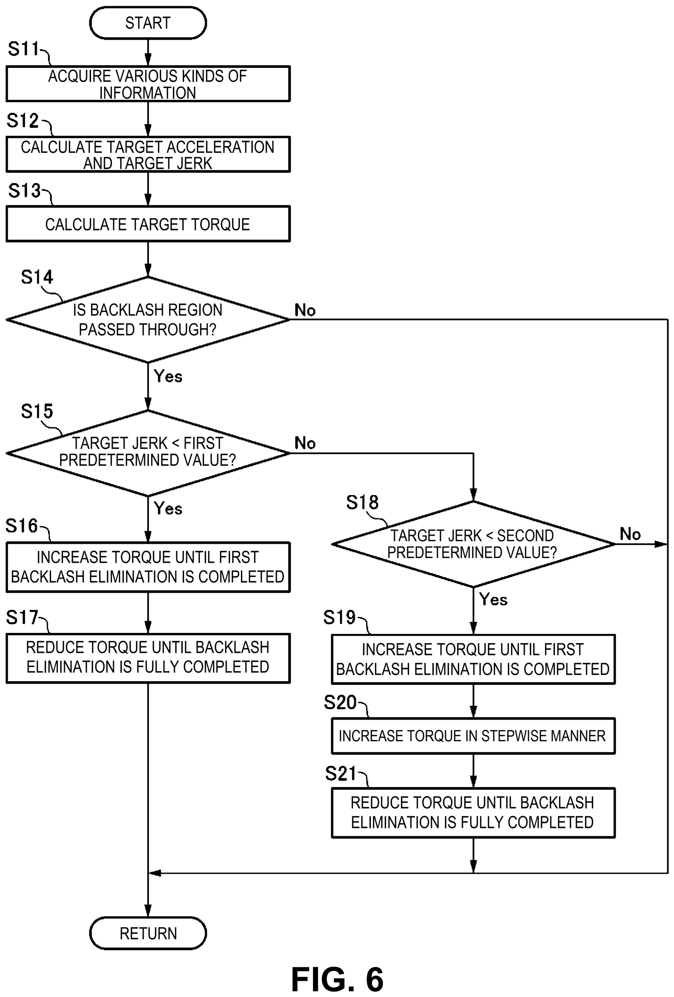

Next, a flowchart showing the backlash elimination control according to the second embodiment will be described with reference to FIG. 6. This flow is also repeatedly executed by the control device 20 in a predetermined cycle. Since steps S11 to S17 are similar to those of the first embodiment (FIG. 4), description thereof will be omitted. Here, step S18 and the subsequent steps will be described.

Step S18 is performed when the target jerk is equal to or larger than the first predetermined value J1 (step S15: No). In step S18, the control device 20 determines whether the target jerk calculated in step S12 is less than the second predetermined value J2. Here, the control device 20 determines whether the driver's acceleration intention is moderate. When the control device 20 determines that the target jerk is less than the second predetermined value J2 (step S18: Yes), that is, when the acceleration intention is moderate, the control device 20 proceeds to step S19. On the other hand, when the control device 20 does not determine that the target jerk is less than the second predetermined value J2 (step S18: No), that is, when the target jerk is equal to or larger than the second predetermined value J2 (when acceleration intention is strong), the control device 20 exits the flow.

Next, in step S19, the control device 20 increases the torque of the motor 2 until the first backlash elimination is completed in the power transmission mechanism 4. Since step S19 is similar to step S16, detailed description thereof will be omitted.

Next, in step S20, the control device 20 increases the torque of the motor 2 in a stepwise manner. In this case, the control device 20 changes the target torque calculated in step S13. Specifically, the control device 20 increases the torque of the motor 2 in a stepwise manner within a range less than a predetermined value (e.g., 3 Nm) larger than zero. The predetermined value is set in advance in view of preventing the eliminated backlash from being separated (that is, preventing tooth separation) due to an excessive increase in the torque of the motor 2.

Next, in step S21, the control device 20 reduces the torque of the motor 2 until the backlash elimination is fully completed in the power transmission mechanism 4. Since step S21 is similar to step S17, detailed description thereof will be omitted.

According to the second embodiment described above, since the torque of the motor 2 is increased in a stepwise manner within the range less than the predetermined value larger than zero when the backlash elimination in the gears of the power transmission mechanism 4 starts when the vehicle transitions from deceleration to acceleration, it is possible to promptly complete the backlash elimination and improve acceleration response. In addition, according to the second embodiment, since the torque that is increased in a stepwise manner is limited to be less than the predetermined value larger than zero, it is possible to avoid separation of the eliminated backlash (that is, tooth separation) and reduce shock caused by this. As a result, according to the second embodiment, it is possible to achieve shock reduction and acceleration response improvement during the backlash elimination in the gears of the power transmission mechanism 4.

In addition, according to the second embodiment, since the torque of the motor 2 is increased in a stepwise manner when the target jerk is equal to or larger than the first predetermined value J1, it is possible to ensure acceleration response when the driver's acceleration intention is relatively strong.

In addition, according to the second embodiment, since the torque of the motor 2 is reduced until the backlash elimination in the gears is completed after the torque of the motor 2 is increased in a stepwise manner, it is possible to effectively reduce shock at the completion of the backlash elimination.

In addition, according to the second embodiment, since the torque of the motor 2 is increased when the backlash elimination in the gears of the power transmission mechanism 4 is completed, it is possible to promptly accelerate the vehicle after the backlash elimination is completed.

In addition, according to the second embodiment, since the increase rate of the torque is limited until the backlash elimination in the gears starts after the torque of the motor 2 reaches the predetermined torque less than zero before the backlash elimination in the gears starts, it is possible to effectively reduce shock at the start of the backlash elimination. In addition, according to the second embodiment, since the torque of the motor 2 is increased before the backlash elimination starts, it is possible to relatively promptly start the backlash elimination and ensure acceleration response.

### <Modifications>

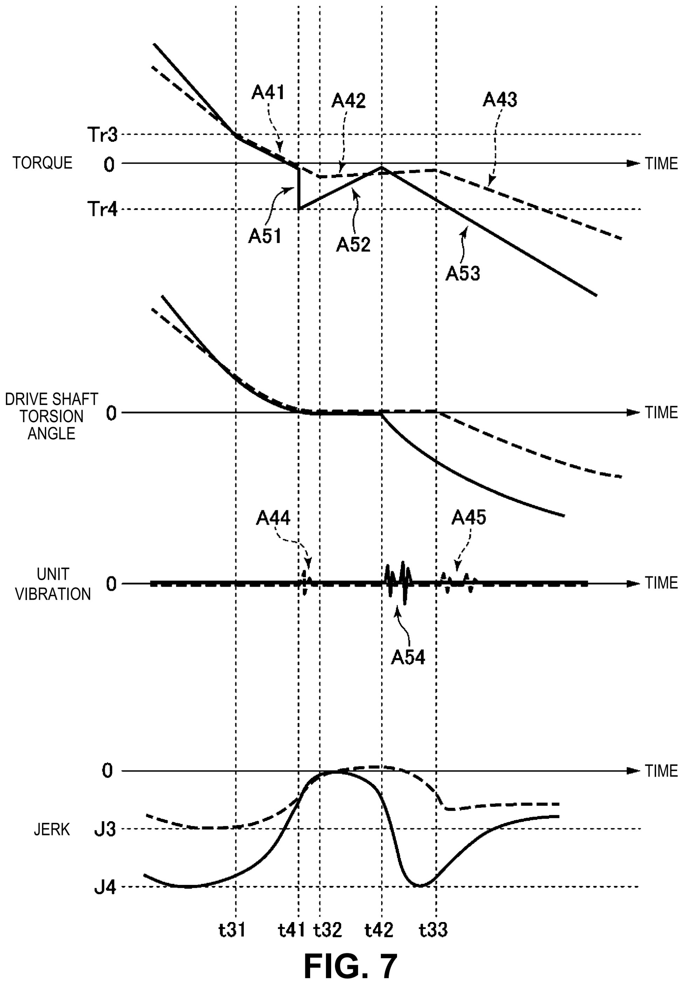

Although in the above embodiments the backlash elimination control when the vehicle transitions from deceleration to acceleration has been described, the backlash elimination control can also be performed in a similar manner when the vehicle transitions from acceleration to deceleration. A time chart showing backlash elimination control according to modifications of the present embodiment will be described with reference to FIG. 7. FIG. 7 also shows, from top to bottom, the torque of the motor 2, the torsion angle of the drive shaft 9, unit vibration inside the vehicle, and the jerk (target jerk). In addition, a dashed-line graph shows a temporal change in each parameter caused by backlash elimination control according to a medication corresponding to the first embodiment (hereinbelow, referred to as "Modification 1"), and a solid-line graph shows a temporal change in each parameter caused by backlash elimination control according to a modification corresponding to the second embodiment (hereinbelow, referred to as "Modification 2").

The backlash elimination control according to Modification 1 is performed when the target jerk (negative value) is equal to or larger than a third predetermined value (negative value) J3 when the vehicle switches from an acceleration state to a deceleration state. The third predetermined value J3 corresponds to the first predetermined value J1 described above. Specifically, in Modification 1, the torque of the motor 2 is gradually reduced (arrow A41) until the backlash elimination in the gears of the power transmission mechanism 4 stars after the torque of the motor 2 reaches a predetermined torque Tr3 larger than zero (time t31). In this case, the torque of the motor 2 is reduced to a torque smaller than zero. By gradually reducing the torque of the motor 2 in this manner, vibration (e.g., rotational rattling) caused when the backlash elimination in the first gear of the plurality of gears of the power transmission mechanism 4 occurs is reduced (arrow A44).

Next, after the start of the backlash elimination in the gears (time t32), the torque of the motor 2 is increased (arrow A42) until the backlash elimination in the gears is fully completed (time t33). By increasing the torque of the motor 2 in this manner, vibration caused when the backlash elimination is fully completed in the plurality of gears of the power transmission mechanism 4 (e.g., vibration caused by rotational backlash elimination or thrust backlash) is reduced (arrow A45). Then, after the backlash elimination in the gears is completed, the torque of the motor 2 is reduced (arrow A43), and the drive shaft 9 begins to twist to the negative side.

According to Modification 1 as such, since the torque of the motor 2 is reduced before the start of the backlash elimination, deceleration response can be ensured to a certain extent, and in addition, since the torque is gradually reduced, shock at the start of the backlash elimination can be effectively reduced.

Next, the backlash elimination control according to Modification 2 is performed when the target jerk (negative value) is less than the third predetermined value (negative value) J3 and equal to or larger than a fourth predetermined value (negative value) J4. The fourth predetermined value J4 corresponds to the second predetermined value J2 described above. Also in Modification 2, as with Modification 1, when the vehicle switches from an acceleration state to a deceleration state, the torque of the motor 2 is gradually reduced (arrow A41) until the backlash elimination in the gears of the power transmission mechanism 4 starts after the torque of the motor 2 reaches the predetermined torque Tr3 larger than zero (time t31). Thereafter, in Modification 2, when the backlash elimination in the gears starts (time t41), the torque of the motor 2 is reduced in a stepwise manner to a predetermined torque Tr4 smaller than zero (arrow A51).

Then, after the torque of the motor 2 is reduced in a stepwise manner, the torque of the motor 2 is increased (arrow A52) until the backlash elimination in the gears is fully completed (time t42). By increasing the torque of the motor 2 in this manner, vibration caused when the backlash elimination is fully completed in the plurality of gears of the power transmission mechanism 4 (e.g., vibration caused by rotational backlash elimination or thrust backlash) is reduced (arrow A54). Then, after the backlash elimination in the gears is completed, the torque of the motor 2 is reduced (arrow A53), and the drive shaft 9 begins to twist to the positive side.

While the backlash elimination in the gears is completed at time t33 in Modification 1 described above, in Modification 2 the backlash elimination in the gears is completed at time t42 that is earlier than time t33. Thus, according to Modification 2, it is possible to shorten the time for the backlash elimination in the gears and improve deceleration response.

### [Reference Signs List]

- 1: engine
- 2: motor
- 3: transmission
- 4: power transmission mechanism
- 5: wheel (driving wheel)
- 9: drive shaft
- 20: control device
- 100: vehicle control system
- SN1: accelerator opening degree sensor
- SN2: vehicle speed sensor

## Claims

1. A vehicle comprising:
a motor (2) that generates torque for driving the vehicle;
a power transmission mechanism (4) configured to transmit the torque of the motor (2) to a driving wheel (5) of the vehicle through a plurality of gears; and
a control device (20) configured to control the torque of the motor (2), **characterized in that**
the control device (20) is configured to control the motor (2) to:
increase the torque of the motor (2) in a stepwise manner within a range less than a predetermined value larger than zero when backlash elimination in the gears of the power transmission mechanism (4) starts when the vehicle transitions from a deceleration state to an acceleration state; and/or
reduce the torque of the motor (2) in a stepwise manner within a range equal to or larger than a predetermined value smaller than zero when backlash elimination in the gears of the power transmission mechanism (4) starts when the vehicle transitions from an acceleration state to a deceleration state.

2. The vehicle according to claim 1, further comprising an accelerator opening degree sensor (SN1) that detects an accelerator opening degree, the accelerator opening degree being an amount of operation on an accelerator pedal of the vehicle, wherein
the control device (20) is configured to
calculate a target jerk that should be generated in the vehicle on the basis of at least the accelerator opening degree, and
when the target jerk is equal to or larger than a predetermined value, control the motor (2) to increase the torque of the motor (2) in a stepwise manner within the range less than the predetermined value when the backlash elimination in the gears starts.

3. The vehicle according to claim 2, further comprising a vehicle speed sensor (SN2) that detects a vehicle speed, wherein
the control device (20) is configured to
calculate the target jerk that should be generated in the vehicle on the basis of at least the accelerator opening degree and the vehicle speed.

4. The vehicle according to any one of claims 1 to 3, wherein the control device (20) is configured to control the motor (2) to reduce the torque of the motor (2) until the backlash elimination in the gears is completed after the torque of the motor (2) is increased in a stepwise manner.

5. The vehicle according to claim 4, wherein the control device (20) is configured to control the motor (2) to increase the torque of the motor (2) upon completion of the backlash elimination in the gears.

6. The vehicle according to any one of claims 1 to 5, wherein when the vehicle transitions from a deceleration state to an acceleration state, the control device (20) is configured to control the motor (2) to increase the torque of the motor (2) and limit an increase rate of the torque until the backlash elimination in the gears starts after the torque of the motor (2) reaches a predetermined torque less than zero, before the backlash elimination in the gears starts.

7. The vehicle according to any one of claims 1 to 6, further comprising an accelerator opening degree sensor (SN1) that detects an accelerator opening degree, the accelerator opening degree being an amount of operation on an accelerator pedal of the vehicle, wherein
the control device (20) is configured to
calculate a target jerk that should be generated in the vehicle on the basis of at least the accelerator opening degree, and
when the target jerk is less than a predetermined value, control the motor (2) to reduce the torque of the motor (2) in a stepwise manner within the range equal to or larger than the predetermined value when the backlash elimination in the gears starts.

8. The vehicle according to claim 7, further comprising a vehicle speed sensor (SN2) that detects a vehicle speed, wherein
the control device (20) is configured to
calculate the target jerk that should be generated in the vehicle on the basis of at least the accelerator opening degree and the vehicle speed.

9. The vehicle according to any one of claims 1 to 8, wherein the control device (20) is configured to control the motor (2) to increase the torque of the motor (2) until the backlash elimination in the gears is completed after the torque of the motor (2) is reduced in a stepwise manner.

10. The vehicle according to claim 9, wherein the control device (20) is configured to control the motor (2) to reduce the torque of the motor (2) upon completion of the backlash elimination in the gears.

11. The vehicle according to any one of claims 1 to 10, wherein when the vehicle transitions from an acceleration state to a deceleration state, the control device (20) is configured to control the motor (2) to reduce the torque of the motor (2) and limit a reduction rate of the torque until the backlash elimination in the gears starts after the torque of the motor (2) reaches a predetermined torque larger than zero, before the backlash elimination in the gears starts.
